# EUROPEAN PATENT APPLICATION

(11) **EP 4 726 617 A1**
(43) Date of publication of application: **15.04.2026**
(21) Application number: 25207831.6
(22) Date of filing: 09.10.2025
(51) Int. Cl.: G06Q 10/047, G06Q 10/083

(54) **INFORMATION PROCESSING PROGRAM, INFORMATION PROCESSING METHOD, AND INFORMATION PROCESSING APPARATUS**

(30) Priority: 11.10.2024 JP 2024179264
(71) Applicant: FUJITSU LIMITED, Kawasaki-shi, Kanagawa 211-8588 (JP)
(72) Inventor: KIMURA, Keiji, Kawasaki-shi, 211-8588 (JP)
(74) Representative: Haseltine Lake Kempner LLP

(57) **Abstract**

An information processing apparatus includes a processor configured to generate a set of a plurality of routes for a plurality of moving bodies that depart from a specific node and return to the specific node via a plurality of nodes, the plurality of routes representing an order in which the plurality of moving bodies visit the nodes generate, by using the generated set of routes, a route selection problem with constraints on a shipment volume of a node serving as a shipment source of packages solve the generated route selection problem and output a result of solving the route selection problem.

## Description

### FIELD

The embodiments discussed herein are an information processing program and the like for solving a delivery planning program.

### BACKGROUND

A delivery planning problem (vehicle routing problem, hereinafter, referred to as VRP) is a problem of finding a route in which a plurality of moving bodies such as carriers deliver packages from a specific point called a depot and return to the depot. The VRP is one of typical combinatorial optimization problems. By imposing constraint conditions on carriers, such as capacity constraints and time frame constraints, the VRP finds an optimal route satisfying the constraint conditions.

In recent years, more and more companies in the logistics industry are aiming to equalize their workloads to prevent unbalanced workloads among certain employees and warehouses and to ensure that the workloads are as evenly distributed as possible. For example, in a case where packages are delivered to a plurality of customers, when a plurality of warehouses as delivery sources are present, an upper limit may be imposed on a shipment volume for each warehouse to avoid a concentration of the delivery sources. The related technologies are described, for example, in: Japanese Laid-open Patent Publication No. 2021-106036.

In such a situation, an optimal delivery route when an upper limit is set on a shipment volume at a delivery source such as a warehouse or a factory is desirably found. However, while general capacity constraints, time frame constraints, and the like are constraint conditions for carriers, constraints on the upper limit of a shipment volume for each warehouse (hereinafter, referred to as "upper limit shipment volume constraints") are constraint conditions for warehouses and are therefore difficult to handle in a delivery planning problem.

Accordingly, it is an object in one aspect of an embodiment of the invention to provide an information processing program, an information processing method, and an information processing apparatus capable of finding an optimal delivery route that suppresses variations in a shipment volume at a delivery source.

### SUMMARY

According to an aspect of an embodiment, an information processing program causes a computer to execute a process including, generating a set of a plurality of routes for a plurality of moving bodies that depart from a specific node and return to the specific node via a plurality of nodes, the plurality of routes; representing an order in which the plurality of moving bodies visit a predetermined number of nodes among the plurality of nodes; solving a route selection problem generated using the generated set of routes and provided with constraints on a shipment volume of the specific node or a node serving as a delivery source of packages among the plurality of nodes; and outputting a result of solving the route selection problem.

### BRIEF DESCRIPTION OF DRAWINGS

FIG. 1 is a diagram for explaining an information processing apparatus according to a first embodiment;
FIG. 2 is a functional block diagram illustrating a functional configuration of the information processing apparatus according to the first embodiment;
FIG. 3 is a flowchart illustrating a processing procedure of the information processing apparatus according to the first embodiment;
FIG. 4 is a diagram illustrating setting information of a test instance according to an application example of the first embodiment;
FIG. 5 is a diagram illustrating a result of solving a test instance according to an application example of the first embodiment;
FIG. 6 is a diagram illustrating a result of solving a test instance according to an application example of the first embodiment;
FIG. 7 is a diagram illustrating a result of solving a test instance according to an application example of the first embodiment;
FIG. 8 is a diagram illustrating shipment volume results for each warehouse according to an application example of the first embodiment; and
FIG. 9 is a diagram illustrating an example of a hardware configuration.

### DESCRIPTION OF EMBODIMENTS

Preferred embodiments will be explained with reference to accompanying drawings. This invention is not limited by these embodiments.

### (a) First Embodiment

### Problem Setting

Before describing the present embodiment, the problem setting for a delivery planning problem with upper limit shipment volume constraints according to the present embodiment is described. For example, for the delivery planning problem with upper limit shipment volume constraints, the following problem setting is performed to find an efficient delivery route satisfying each constraint condition, including the upper limit shipment volume constraints.

· A plurality of trucks departing from a specific point visit several nodes (customers or warehouses) and return to the starting point again.
· Each carrier loads packages at the warehouse and delivers the packages to the customer.
· A plurality of warehouses are present, any of which can be loaded, and a plurality of visits to a warehouse can be made.
· All customers need receive their packages.
The carrier is subject to constraint conditions such as a loadable capacity (capacity constraints), a delivery time frame available to each customer (time frame constraints), and a maximum travel time of the carrier (maximum travel time constraints).
· Each warehouse has an upper limit on a shipment volume, which is not exceedable.
· The delivery cost for each carrier is defined as the travel time, travel distance, fixed cost, or the like, or a weighted linear sum of these.
· Find a route for each carrier that satisfies each of the above constraint conditions and minimizes the total delivery cost.

### Expression Method

The expression method of a delivery planning problem handled by a delivery optimization system implemented by the information processing apparatus in the present embodiment is described below. In the following, first, the definition of "task", the definition of "task group", and the definition of "maximum total value constraint", which are introduced to express the delivery planning problem, are sequentially described.

The definition of "task" is described. The task is the work of collecting and delivering packages. For example, the task includes the following information.
* Collection node: Node that collects packages.
* Delivery node: Node that delivers packages.
* Time frame: Time frame related to collection and delivery.
* Size: Size of package.

The definition of "task group" is described. The task group is a subset of a task set including all tasks. For each task group, at least one task included in the task group is assigned to a carrier. For example, when the task groups are G₁ = {1, 2} and G₂ = {3, 4}, either task 1 or 2 needs be assigned to a carrier and either task 3 or 4 needs be assigned to a carrier.

The definition of "maximum total value constraint" is described. The maximum total value constraint is defined as satisfying the following Formula (1) for determined routes r1, ..., rm when a function f(r) determining a non-negative value and a maximum total value M (> 0) are given for any carrier route r.

Including the concepts described above, the delivery optimization system according to the present embodiment expresses the delivery planning problem as follows.
- V: Node set.
- s ∈ V: Departure node of carrier and returning node.
- T: Task set.
- Gᵢ(i = 1,...,n) ⊆ T: n task groups.
- fⱼ(r): Function to determine non-negative value for carrier route r for representing maximum total value constraints.
- Mⱼ(j = 1,...,m): Maximum total value.
- g(r): Function to calculate delivery cost (positive value) for carrier route r.
- Constraint condition list for each carrier: For example, the following are applicable.

- Capacity Constraint: Capacity that can be loaded on carrier (time frame constraint).
- Time Frame Constraint: Time frame within which packages can be delivered, which is set at different times for each customer.
- Maximum travel time constraint: Maximum travel time of carrier.

The correspondence between the expression method described above and the delivery planning problem with upper limit shipment volume constraints according to the present embodiment are described below, respectively.
. Set the set of customer nodes as C = {c₁,...,cₙ}, set the set of warehouse nodes as P = {p₁,...,pₘ}, and set the starting point as node s.
· Determine V as C∪P∪{s}.
Define task having the following information for each warehouse node pj∈P and each customer node cᵢ∈C.

* Collection node: Warehouse node pⱼₒ.
* Delivery node: Customer node cᵢₒ.
* Time frame: Delivery time frame for customer node cᵢ.
* Size: Size of package to be delivered to customer node Ci.

. Determine all (n x m) tasks defined above as task set T.
For each customer node cᵢ (i = 1,...,n), determine the set of tasks whose delivery node is cᵢ as task group Gᵢ.
. For each warehouse node pⱼ (j = 1,...,m), define function fⱼ(r) that determines shipment volume at warehouse node pⱼ from carrier route r, and determine upper limit of shipment volume at warehouse node pⱼ as Mⱼ.
· Define delivery cost for route r of each carrier as g(r).
· Constraint conditions for each carrier, such as capacity constraints, time frame constraints, and maximum travel time constraints, are included in "constraint condition list for each carrier".

### Processing Details of Information Processing Apparatus 100

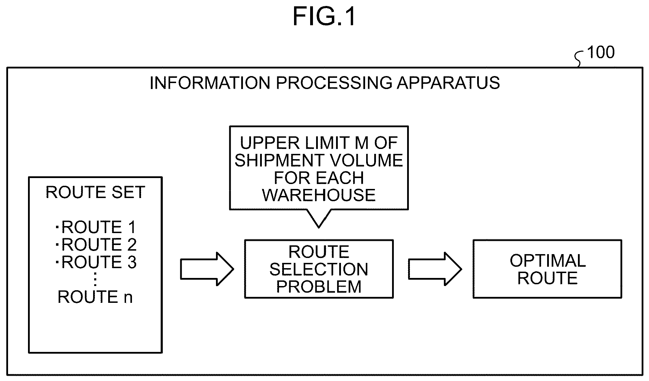

The information processing apparatus 100 that solves the above-described delivery planning problem with upper limit shipment volume constraints is described below. FIG. 1 is a diagram for explaining the information processing apparatus according to the first embodiment. The information processing apparatus 100 illustrated in FIG. 1 is an example of a computer device that outputs an optimal transportation route that takes into account the upper limit of a shipment volume for each warehouse by solving the above-described delivery planning problem with upper limit shipment volume constraints.

As illustrated in FIG. 1, the information processing apparatus 100 generates a set of a plurality of routes for a plurality of moving bodies that depart from a specific node and return to the specific node via a plurality of nodes, the plurality of routes representing an order in which the plurality of moving bodies visit the nodes. Subsequently, the information processing apparatus 100 solves a route selection problem generated using the generated set of routes and provided with constraints on the shipment volume at a predetermined node, and outputs solution results.

For example, the information processing apparatus 100 generates a set of a plurality of routes (routes 1 to n) for a route when a carrier carrying a package departs from the node s at the starting point, delivers the package collected at the warehouse node pⱼ to the customer node cᵢ, and then returns to the node s. Subsequently, the information processing apparatus 100 generates a route selection problem when the upper limit of the shipment volume for each warehouse node pⱼ is set to Mⱼ, and selects an optimal route that takes into account the upper limit of the shipment volume for each warehouse by solving the generated route selection problem.

As a result, the information processing apparatus 100 can solve the route selection problem when an upper limit is set on the shipment volume at the delivery source, and thus can find an optimal delivery route that suppresses variations in the shipment volume at the delivery source.

### Functional Configuration of Information Processing Apparatus 100

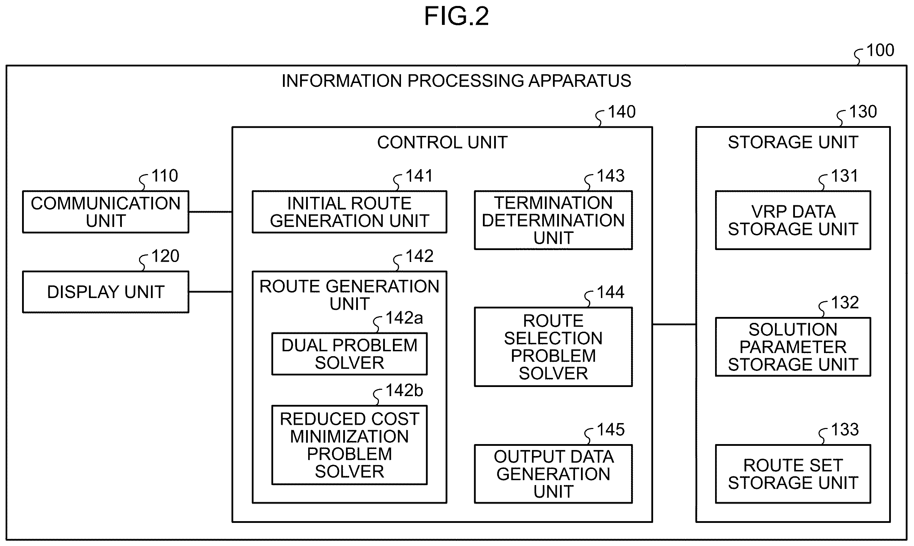

FIG. 2 is a functional block diagram illustrating a functional configuration of the information processing apparatus according to the first embodiment. As illustrated in FIG. 2, the information processing apparatus 100 includes a communication unit 110, a display unit 120, a storage unit 130, and a control unit 140.

The communication unit 110 is a processing unit that controls communication with other devices, and is implemented by, for example, a communication interface or the like. For example, the communication unit 110 performs the transmission and reception of various data to and from external devices, such as devices used by administrators or the like.

The display unit 120 is a processing unit that displays various types of information, and is implemented by, for example, a display, a touch panel, or the like.

For example, the display unit 120 displays a route data list that is finally output and data included in each route.

The storage unit 130 is a processing unit that stores various data, computer programs executed by the control unit 140, or the like, and is implemented by, for example, a memory, a hard disk, or the like. The storage unit 130 includes a VRP data storage unit 131, a solution parameter storage unit 132, and a route set storage unit 133.

The VRP data storage unit 131 stores various data used in VRP. For example, the VRP data storage unit 131 stores package data, node data, and carrier data. The package data includes, for example, collection and delivery nodes, a collection time frame, and a delivery time frame. The node data includes, for example, a depot node, an upper limit shipment volume, a travel time between nodes, and available edge data. The carrier data includes, for example, a maximum load capacity, a node that can be visited, a maximum travel time, a step function cost, and a fixed cost.

The solution parameter storage unit 132 stores parameters used by the information processing apparatus 100 to solve each optimization problem. For example, the solution parameter storage unit 132 stores route generation parameters and route selection parameters. The route generation parameters include parameters related to time limits and dual problem solvers. The route selection parameters include, for example, parameters related to time limits and route selection problem solvers.

The route set storage unit 133 stores a set of a plurality of routes r generated by the information processing apparatus 100, which are routes for a plurality of moving bodies departing from a specific node and returning to the specific node via a plurality of nodes, the routes representing an order in which the plurality of moving bodies visit the nodes. For example, the route set storage unit 133 stores route sets, which are generated by an initial route generation unit 141 and a route generation unit 142 to be described below and are subject to route selection by a route selection problem solver 144.

The control unit 140 is a processing unit that controls the entire information processing apparatus 100, and is implemented by, for example, a processor or the like. The control unit 140 includes the initial route generation unit 141, the route generation unit 142, a termination determination unit 143, the route selection problem solver 144, and an output data generation unit 145, and the route generation unit 142 includes a dual problem solver 142a and a reduced cost minimization problem solver 142b. The initial route generation unit 141, the route generation unit 142, the dual problem solver 142a, the reduced cost minimization problem solver 142b, the termination determination unit 143, the route selection problem solver 144, and the output data generation unit 145 are implemented by electronic circuitry included in the processor, a process performed by the processor, or the like.

The initial route generation unit 141 generates an initial route to be processed by the route selection problem solver 144 to be described below. For example, the initial route generation unit 141 generates a delivery route that satisfies the condition of delivering packages to all customers and stores the generated delivery route in the route set storage unit 133. The method of generating the initial route by the initial route generation unit 141 is not particularly limited, but one of the simplest methods is, for example, to generate a simple initial route that repeats collection at the warehouse node and delivery at the customer node for each customer.

The solution by the delivery optimization system implemented by the information processing apparatus 100 is roughly divided into two phases: (1) Generating efficient route candidates and (2) Selecting an optimal one from the candidates. In the following, a process of the route selection problem solver 144 is described first, followed by processes of the route generation unit 142 and the termination determination unit 143.

The route selection problem solver 144 selects an optimal route from a set of routes by solving the route selection problem. For example, the route selection problem solver 144 selects an optimal route from the routes stored in the route set storage unit 133 when the termination of the route generation process by the termination determination unit 143 to be described below is notified. The following definitions are made with respect to the route selection problem.
· Set generated route set as R.
· Define constant aᵢᵣ as in the following Formula (2).
· For each route r∈R, define 0-1 variable xr in route selection problem as in the following Formula (3).

Subsequently, the route selection problem is formulated as in the following Formula (4).

The route selection problem solver 144 selects an optimal route from the route set R by solving the route selection problem formulated in Formula (4) above. An inequality regarding the maximum total value M (maximum total value constraint) is constructed in Formula (4) above, so that the route selection problem solver 144 can select an optimal route that takes into account the upper limit of the shipment volume for each warehouse.

Note that the route selection problem according to the present embodiment is a class of optimization problems called 0-1 integer programming problems and software for solving the 0-1 integer programming problems is not particularly limited.

The route generation unit 142 generates routes to be processed by the route selection problem solver 144 to be described below, by using a method based on a column generation method, and the column generation method includes two procedures: (1) Solving a dual problem of a linear relaxation problem of the route selection problem for the current route set R and (2) Solving a reduced cost minimization problem for the dual problem. In the route generation unit 142, the dual problem solver 142a performs the above procedure (1) and the reduced cost minimization problem solver 142b performs the above procedure (2), thereby newly generating efficient route candidates.

The dual problem solver 142a solves the dual problem of the linear relaxation problem of the route selection problem for the current route set R. In the following, specific examples of each problem related to the solution by the dual problem solver 142a are described.

First, the route selection relaxation problem removes integer constraints on each variable xᵣ in the route selection problem and is expressed as in the following Formula (5).

In Formula (5) above, when it is noted that an optimal solution to the relaxation problem satisfies xᵣ ≤ 1 even without the constraint condition xᵣ ≤ 1, xᵣ ≤ 1 can be deleted. Accordingly, the relaxation problem of the route selection problem can be rewritten as in the following Formula (6).

The above relaxation problem is positioned as an optimization problem called the linear relaxation problem. The linear programming problem is defined as a dual problem, and the dual problem for the above relaxation problem is expressed by the following Formula (7).

The dual problem solver 142a calculates an optimal solution (y*,z*) of the dual problem at a certain iteration of the column generation method by solving the dual problem expressed by Formula (7) above.

The reduced cost minimization problem solver 142b solves a reduced cost minimization problem for the optimal solution (y*,z*) solved by the dual problem solver 142a.

In the following, specific examples of each problem related to the solution by the reduced cost minimization problem solver 142b are described.

When the optimal solution (y*,z*) is solved by the dual problem solver 142a, the reduced cost minimization problem at that iteration can be expressed as in Formula (8) below.

In general, finding an optimal solution to a reduced cost minimization problem is difficult. Therefore, the reduced cost minimization problem solver 142b performs a process with a policy of obtaining a higher quality of solution by a local search instead of solving an optimal solution.

For example, an arbitrary task t unassigned to a route r* satisfying constraint conditions in a constraint condition list for each carrier is assigned to the route r*· The following methods are examples of the assignment methods.
· Assign the task t without adding any node to the route r*.
· Add a collection node or a delivery node for the task t to the route r* (including the case of adding both the collection node or the delivery node) and assign the task t.

Among routes where the task t is assigned to the route r* by the above method, a set of routes satisfying the constraint conditions in the constraint condition list for each carrier is defined as N(r*,t). In each iteration of the local search, the reduced cost minimization problem solver 142b searches for a task t* and a new route r'∈N(r*,t) that most improve the reduced cost with respect to the current route r*.

The following describes an example of an efficient calculation method performed by the reduced cost minimization problem solver 142b. The efficient calculation method uses the following assumptions included in problem setting.
· Assumption (1) - For any route r*, task t, and route r∈N(r*,t), g(r*) ≤ g(r) is established.
· Assumption (2) - For any route r*, task t, and route r∈N(r*,t), fⱼ(r*) ≤ fⱼ(r) (j = 1,...,k) is established.
· Assumption (3) - Each task group Gᵢ(i = 1,...,n) is a mutually sparse set (common part is an empty set).

When the reduced cost for any route r is set to the following Formula (9), the reduced cost minimization problem solver 142b performs efficient calculations according to the following devisals (1) to (4) by using the above assumptions (1) to (3).

First, the devisal (1) is described. In the devisal (1), the assumption (1) and the assumption (2) are used as conditions for use. In the devisal (1), when the task t is considered to be assigned to the route r* for any i = 1,...,n with yᵢ*= 0 and t∈Gᵢ, F(r*) ≤ F(r) is established for any r∈N(r*,t) by yᵢ*= 0, the assumption (1), the assumption (2), and zⱼ* ≥ 0 (j = 1,...,k). That is, the devisal (1) represents that the assignment of a task included in the task group Gᵢ with yᵢ*= 0 does not improve the reduced cost, resulting in no need to calculate the reduced cost for such a route.

The devisal (2) is described below. In the devisal (2), the assumption (1), the assumption (2), and the assumption (3) are used as conditions of use. In the devisal (2), when a task is considered to be assigned to the route r*, the following Formula (10) is established, by the assumption (3), for any i∈{1,...,n}, task t∈Gᵢ, and route r∈N(r*,t) for which aᵢ(r*) is 1. Accordingly, in the devisal (2), F(r*) ≤ F(r) is established by the assumption (1), the assumption (2), and zⱼ* ≥ 0 (j = 1,..., k). That is, the devisal 2 represents that the assignment of a task included in the task group Gᵢ with aᵢ(r*) = 1 does not improve the reduced cost, resulting in no need to calculate the reduced cost for such a route.

The devisal (3) is described below. In the devisal (3), the assumption (2) is used as conditions for use. In the devisal (3), when any task tET is considered to be assigned to any route r*, F(r*) ≤ F(r) is established, by the assumption (2), for the route r∈N(r*,t) satisfying the following Formula (11). That is, the devisal (3) represents that when a task is assigned to a route to improve the reduced cost, the possibility of improvement of the reduced cost can be determined from the current route without calculating the following Formula (12) in Formula (9) above indicating the reduced cost.

The devisal (4) is described below. In the devisal (4), F(r*) ≤ F(r) is established, by Zⱼ*fⱼ(r) ≥ 0 (j = 1,...,k), for any route r',r satisfying the following Formula (13). That is, the devisal (4) represents that, as in the devisal (3), the possibility of improvement of the reduced cost can be determined from the current route without calculating the following Formula (12) in Formula (9) above indicating the reduced cost.

The reduced cost minimization problem solver 142b performs a local search for a cost minimization problem by the following search procedure from step (1) to step (4), including the above devisals. Note that the reduced cost minimization problem solver 142b receives, as input, the initial route r₀, the task set T, and the optimal solution (y*,z*) of the dual problem, and outputs a searched route.

First, the process of step (1) is described. At step (1), initializations from the following step (1)-1 to step (1)-4 are performed in sequence.

At step (1)-1, under the condition that r*: = r0, r': = r0, α': = F(r'), and T': = T, β* is defined as the following formula (14).

At step (1)-2 (devisal (1)), when the assumption (1) and the assumption (2) are satisfied, the set of i for which yᵢ* = 0 (i = 1,...,n) is set as I₁, and D₁ is defined as the following Formula (15). Subsequently, T' is redefined as T'\D₁.

At step (1)-3 (devisal (2)), when the assumption (1), the assumption (2), and the assumption (3) are satisfied, the set of i for which aᵢ(r*) = 1 (i = 1,..., n) is set as I₂ and D₂ is defined as the following Formula (16). Subsequently, T' is redefined as T'\D₂.

At step (1)-4, when none of the assumption (1), the assumption (2), and the assumption (3) are satisfied, a task to be assigned to the route r* is removed from T'.

Subsequently, the process of step (2) is described. At step (2), for each route r∈N(r*,t) of each task t∈T', processes from the following step (2)-1 to step (2)-4 are performed in sequence.

At step (2)-1, the following Formula (17) is calculated.

At step (2)-2 (devisal (3)), when the assumption (2) is satisfied and α* ≤ γ+β*, since the reduced cost is not improvable with the route r, the following step (2)-1 is performed for reN (r*,t).

At step (2)-3 (devisal (4)), when α' ≤ γ, since the reduced cost is not improvable with the route r, the following step (2)-1 is performed for reN (r*,t).

At step (2)-4, when α' > F(r), an update of α': = F(r) and r': = r is performed.

Subsequently, the process of step (3) is described. At step (3), when α' = α*, the search is terminated and the route r* is output.

Subsequently, the process of step (4) is described. At step (4), the task assigned at step (2) is set as t*, an update is performed by performing processes from the following step (4)-1 to step (4)-3, and the procedure returns to the process of step (2).

At step (4)-1, under the condition that r*: = r' and α*: = α', β* is defined as the following formula (18).

At step (4)-2 (devisal (2)), when the assumption (1), the assumption (2), and the assumption (3) are satisfied, the task group Gᵢ including the task t* is removed from T'.

At step (4)-3, when none of the assumption (1), the assumption (2), and the assumption (3) are satisfied, the task t* is removed from T'.

The reduced cost minimization problem solver 142b performs a local search for the cost minimization problem by performing the processing procedure from step (1) to step (4) described above, and solves the reduced cost minimization problem for the optimal solution (y*,z*) solved by the dual problem solver 142a. As a result, the reduced cost minimization problem solver 142b can newly generate candidates for efficient routes and store the generated candidates in the route set storage unit 133.

The termination determination unit 143 determines whether to terminate the process of newly generating the candidates for efficient routes by the route generation unit 142. For example, the termination determination unit 143 determines whether a route with negative reduced cost has been generated by the route generation unit 142. When the route with negative reduced cost has been generated, the termination determination unit 143 determines whether the time needed for route generation exceeds the time limit for the route generation parameters stored in the solution parameter storage unit 132.

When no route with negative reduced cost has been generated or when the time needed for route generation exceeds the time limit for the route generation parameters, the termination determination unit 143 notifies the route selection problem solver 144 that the route generation process has ended. Note that when the time needed for route generation does not exceed the time limit for the route generation parameters, the termination determination unit 143 notifies the route generation unit 142 to continue the route generation process.

The output data generation unit 145 generates route data based on the optimal route selected by the route selection problem solver 144. For example, the output data generation unit 145 generates output data such as a route data list of routes selected by the route selection problem solver 144, and the node visiting order, node visit times, and task data of each route.

### Processing Procedure of Information Processing Apparatus 100

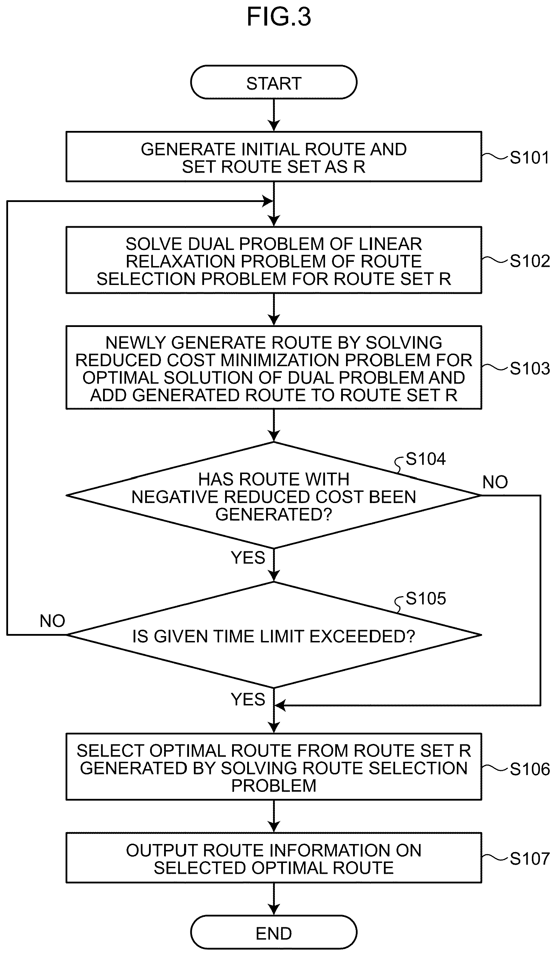

An example of the processing procedure of the information processing apparatus 100 according to the first embodiment is described below. FIG. 3 is a flowchart illustrating the processing procedure of the information processing apparatus according to the first embodiment. Note that steps in the flowchart illustrated in FIG. 3 can be performed in a different order and some processes may be added or omitted.

First, the information processing apparatus 100 generates an initial route and sets a route set as R (S101). Subsequently, the information processing apparatus 100 solves the dual problem of a linear relaxation problem of a route selection problem for the route set R (S102). Subsequently, the information processing apparatus 100 newly generates a route by solving a reduced cost minimization problem for an optimal solution of the dual problem, and adds the generated route to the route set R (S103).

Subsequently, the information processing apparatus 100 determines whether a route with negative reduced cost has been generated (S104). When the route with negative reduced cost has been generated (Yes at S104), the information processing apparatus 100 determines whether the time needed for route generation exceeds a given time limit (S105). When no route with negative reduced cost has been generated (No at S104) or when the time needed for route generation exceeds the given time limit (Yes at S105), the information processing apparatus 100 selects an optimal route from the route set R generated by solving the route selection problem (S106).

When the time needed for route generation does not exceed the given time limit (No at S105), the information processing apparatus 100 returns to S102 and continues the procedure. After S106, the information processing apparatus 100 outputs route information on the selected optimal route (S107) and terminates the procedure.

### Effects

As described above, the information processing apparatus 100 generates a set of a plurality of routes for a plurality of moving bodies that depart from a specific node and return to the specific node via a plurality of nodes, the plurality of routes representing an order in which the plurality of moving bodies visit a predetermined number of nodes among the plurality of nodes, solves a route selection problem generated using the generated set of routes and provided with constraints on a shipment volume at the specific node or a node serving as a delivery source of packages among the plurality of nodes, and outputs a result of solving the route selection problem.

As a result, the information processing apparatus 100 can suppress variations in the shipment volume at a warehouse node by performing route selection to reduce the amount of violation of an inequality constraint on the shipment volume at a predetermined node. That is, the information processing apparatus 100 can find an optimal delivery route that suppresses variations in the shipment volume at the delivery source.

In addition, the information processing apparatus 100 solves the dual problem of the linear relaxation problem of the route selection problem for the set of routes, and adds a route corresponding to the result of solving the reduced cost minimization problem to the set of routes when the reduced cost of a solution obtained by solving the reduced cost minimization problem for the result of solving the dual problem is negative. As a result, the information processing apparatus 100 can find an optimal delivery route after newly adding an efficient route to the set of routes when an upper limit is set on the shipment volume.

### Application Example

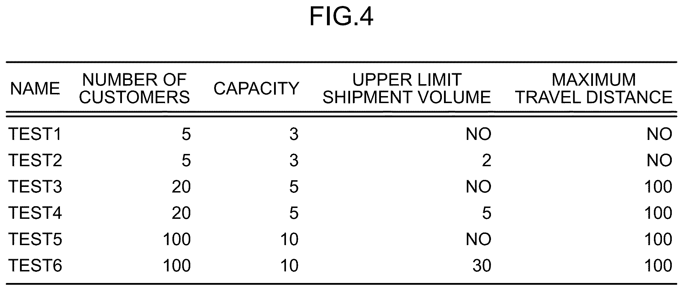

The following describes an example of applying the delivery optimization system according to the information processing apparatus 100 described above to the delivery planning problem with an upper limit shipment volume. Instances of the delivery planning problem with an upper limit shipment volume are set as follows. FIG. 4 is a diagram illustrating setting information of a test instance according to an application example of the first embodiment.
· Set coordinates of a node at a starting point as (0, 0).
·Set four warehouse nodes with coordinates (10, 10), (10, -10), (-10, 10), and (-10, -10), respectively.
· Randomly generate the coordinates (x, y) of a customer node in the range of -30 ≤ x ≤ 30 and -30 ≤ y ≤ 30.
· Set the size of a package for each customer to 1.
· Set constraint conditions for each carrier as capacity constraints and constraints on a maximum travel distance.
· For each warehouse, an upper limit shipment volume of the same value is imposed (instances with no upper limit are also generated for comparison).
· Set delivery cost as a travel distance.
· Set a setting example of actual numerical values for six test instances as illustrated in FIG. 4.

The setting example of actual numerical values for six test instances illustrated in FIG. 4 is described below. As illustrated in FIG. 4, the application example performs a process of outputting an optimal delivery route in each of the six test instances. In FIG. 4, "testl" corresponds to "test2", "test3" corresponds to "test4", and "test5" corresponds to "test6". By comparing the delivery routes in both setting examples, changes between routes when an upper limit shipment volume is set and routes when no upper limit shipment volume is set are described.

For example, "testl" outputs an optimal delivery route for a case where packages are to be delivered to five customers, with a capacity constraint of three packages and no upper limit shipment volume or maximum travel distance constraint set. On the other hand, "test2" outputs an optimal delivery route for a case where packages are to be delivered to five customers, with a capacity constraint of three packages, upper limit shipment volume constraints of two packages, and no maximum travel distance constraint set.

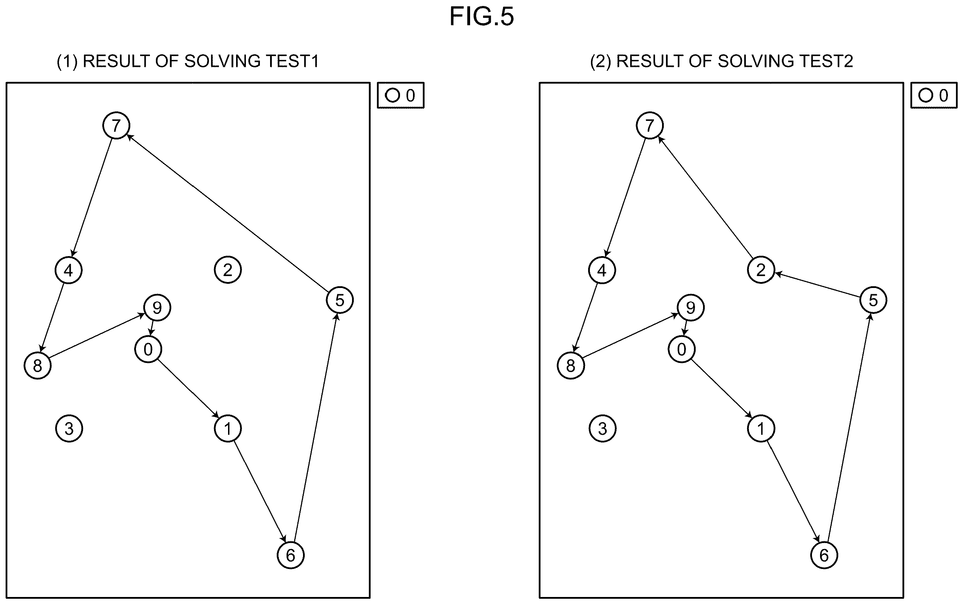

Subsequently, results of solving the above-described six test instances are described. FIGS. 5 to 7 are diagrams illustrating results of solving the test instances according to the application example of the first embodiment. In FIGS. 5 to 7, node 0 indicates the departure node of a carrier, nodes 1, 2, 3, and 4 indicate warehouse nodes, and node 5 and subsequent nodes indicate customer nodes.

First, results of solving "testl" and "test2" are described with reference to FIG. 5. As indicated by the results of solving "testl" illustrated in FIG. 5(1), the route of "testl" with no upper limit shipment volume constraints set has a shipment volume of 3 from the warehouse at the node 1. Thus, the result of solving "testl" does not satisfy the condition of "test2" where the upper limit shipment volume is set to "2".

On the other hand, the route of "test2" passes through the node 2 after the node 5, so that the shipment volume from all the warehouses is 2 or less. That is, in "test2" with the upper limit shipment volume constraints set, the selection of a route satisfying the upper limit shipment volume is confirmed.

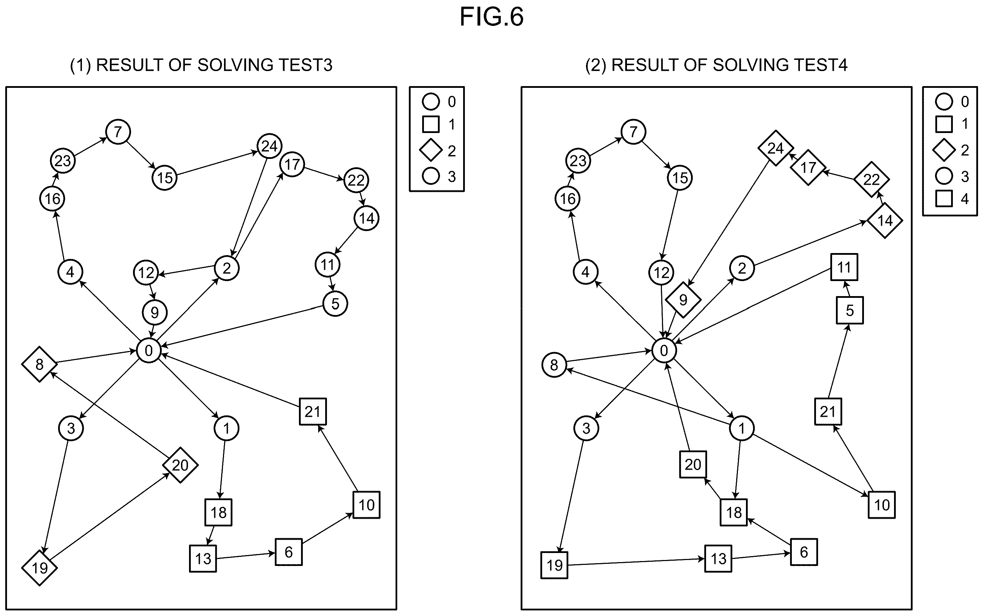

Results of solving "test3" and "test4" are described below with reference to FIG. 6. As indicated by the result of solving "test3" illustrated in FIG. 6(1), the route of "test3" with no upper limit shipment volume constraints set has a shipment volume of 7 from the warehouse at the node 2. Thus, the result of solving "test3" does not satisfy the condition of "test4" where the upper limit shipment volume is set to "5".

On the other hand, the route of "test4" efficiently passes through all the warehouse nodes, so that the shipment volume from all the warehouses is 5 or less. That is, in "test4" with the upper limit shipment volume constraints set, the selection of a route satisfying the upper limit shipment volume is confirmed.

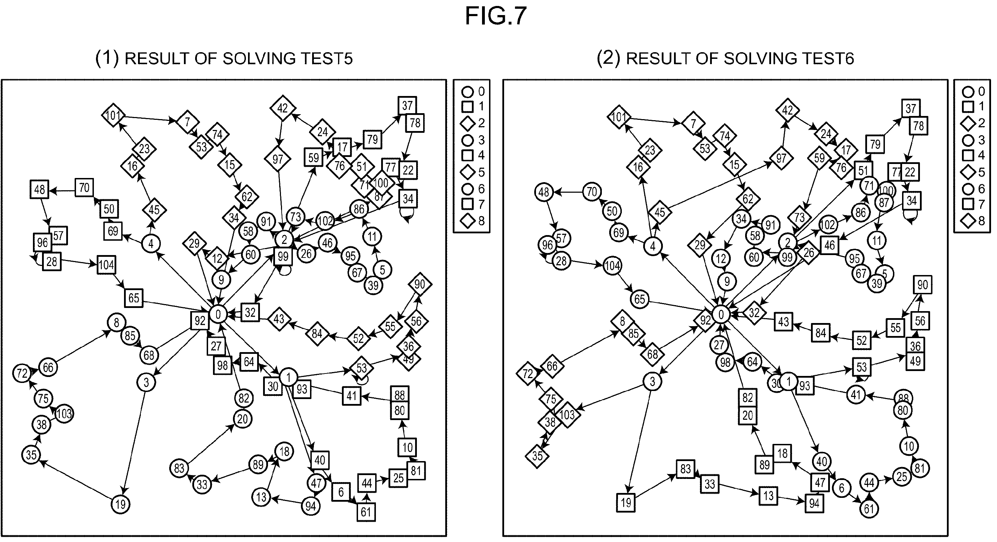

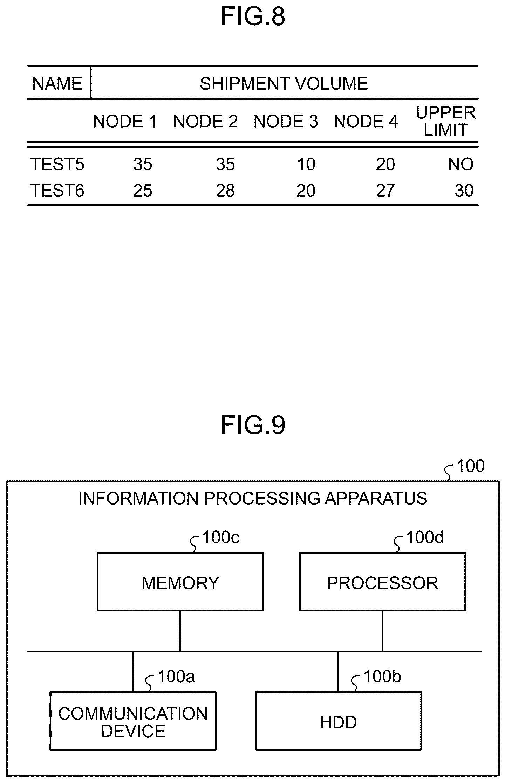

Subsequently, results of solving "test5" and "test6" are described with reference to FIG. 7. Since the number of customers for "test5" and "test6" is set to 100 and solution results are complicated, the shipment volume for each warehouse is mainly described below. FIG. 8 is a diagram illustrating shipment volume results for each warehouse according to the application example of the first embodiment.

As illustrated in FIG. 8, the shipment volume for each warehouse node in "test5" is 35 for the node 1. Thus, the result of solving "test5" does not satisfy the condition of "test6" where the upper limit shipment volume is set to "30". On the other hand, the route of "test6" uses the node 3 more aggressively than "test5", so that the shipment volume from all the warehouses is 30 or less. That is, in "test6" with the upper limit shipment volume constraints set, the selection of a route satisfying the upper limit shipment volume is confirmed.

As indicated by the aforementioned application example, the information processing apparatus 100 can output an optimal delivery route satisfying that a shipment volume at each warehouse does not exceed a shipment volume set as an upper limit by solving a delivery planning problem with upper limit shipment volume constraints in which an upper limit of a shipment volume of each warehouse is set as a constraint.

### (b) Second Embodiment

Although the embodiments of the present invention have been described above, the present invention may be implemented in a variety of different forms in addition to the embodiments described above.

### Numerical values or the like

The number of rows and columns, element values, and the like of the matrices used in the above embodiments are merely examples and can be changed arbitrarily. The flow of the process described in each flowchart can also be changed as appropriate without inconsistency.

### System

The processing procedures, control procedures, specific names, and information including various data and parameters, which have been described above documents and drawings can be changed arbitrarily unless otherwise noted.

In addition, each component of each device illustrated in the drawing is a functional concept and does not necessarily have to be physically configured as illustrated in the drawing. That is, the specific forms of dispersion and integration of each device are not limited to those illustrated in the drawing. That is, the specific forms can be configured by functionally or physically distributing and integrating all or part thereof in arbitrary units according to various loads, usage conditions, and the like.

Moreover, each processing function performed by each device can be implemented in whole or in part by a CPU and a computer program that is analyzed and executed by the CPU, or by hardware using wired logic.

### Hardware

FIG. 9 is a diagram illustrating an example of a hardware configuration. As illustrated in FIG. 9, the information processing apparatus 100 includes a communication device 100a, a hard disk drive (HDD) 100b, a memory 100c, and a processor 100d. The parts illustrated in FIG. 9 are interconnected by buses or the like.

The communication device 100a is a network interface card or the like and communicates with other devices. The HDD 100b stores computer programs and DBs that operate the functions illustrated in FIG. 4.

The processor 100d reads the computer programs that executes the same processes as the processing units illustrated in FIG. 2 from the HDD 100b or the like, and loads the computer programs into the memory 100c to operate the process of performing the functions described in FIG. 2 or the like. For example, the process performs the same functions as each processing unit included in the information processing apparatus 100. Specifically, the processor 100d reads, from the HDD 100b or the like, a computer program having the same functions as the initial route generation unit 141, the route generation unit 142, the dual problem solver 142a, the reduced cost minimization problem solver 142b, the termination determination unit 143, the route selection problem solver 144, the output data generation unit 145, and the like. Subsequently, the processor 100d performs a process of performing the same process as the initial route generation unit 141, the route generation unit 142, the dual problem solver 142a, the reduced cost minimization problem solver 142b, the termination determination unit 143, the route selection problem solver 144, the output data generation unit 145, and the like.

In this way, the information processing apparatus 100 operates as an information processing apparatus that performs an information processing method by reading and executing the computer program. The information processing apparatus 100 can also read the above computer program from a recording medium by a medium reading device and execute the read computer program to implement the same functions as in the above embodiment. Note that a computer program in other embodiments is not limited to being executed by the information processing apparatus 100. For example, the above embodiment may be equally applied to cases where other computers or servers execute the computer program or where they execute the computer program in cooperation with each other.

The computer program may be distributed over a network such as the Internet. The computer program may also be recorded on a computer-readable recording medium such as a hard disk, a flexible disk (FD), a CD-ROM, a magnetooptical disk (MO), and a digital versatile disc (DVD), and executed by a computer that reads the computer program from the recording medium.

The present invention can find an optimal delivery route that suppresses variations in a shipment volume at a delivery source.

## Claims

1. An information processing program causing a computer (100) to execute a process comprising:
generating (S101) a set of a plurality of routes for a plurality of moving bodies that depart from a specific node and return to the specific node via a plurality of nodes, the plurality of routes representing an order in which the plurality of moving bodies visit a predetermined number of nodes among the plurality of nodes;
solving (S106) a route selection problem generated using the generated set of routes and provided with constraints on a shipment volume of the specific node or a node serving as a delivery source of packages among the plurality of nodes; and
outputting (S107) a result of solving the route selection problem.

2. The information processing program according to claim 1, the process further includes generating (S102, S103) a route to be newly added to the set of routes, the route satisfying constraints on the shipment volume.

3. The information processing program according to claim 2, wherein
the generating includes:
solving (S102) a dual problem of a linear relaxation problem of the route selection problem for the set of routes;
solving (S103) a reduced cost minimization problem for a result of solving the dual problem; and
when reduced cost of a solution obtained by solving the reduced cost minimization problem is negative, adding (S103) the route corresponding to a result of solving the reduced cost minimization problem to the set of routes.

4. The information processing program according to claim 1, wherein,
the solving (S106) includes:
a carrier carrying packages is assigned to at least one of tasks included in each task group that is a subset of all tasks representing work of collecting and delivering the packages;
the carrier travels a route for performing the assigned task; and
the route selection problem is solved for each node serving as a delivery source of the packages such that a total amount of the shipment volume on each route via the node is equal to or less than a maximum total value constraint that is a constraint on the shipment volume.

5. The information processing program according to claim 4, wherein
the task includes
a collection node that collects the packages among the specified node or the plurality of nodes, a delivery node that delivers the packages among the specified node or the plurality of nodes, an amount of the packages to be collected and delivered, and a time frame for the collection and delivery.

6. An information processing method carried out by a computer (100), comprising:
generating a set of a plurality of routes for a plurality of moving bodies that depart from a specific node and return to the specific node via a plurality of nodes, the plurality of routes representing an order in which the plurality of moving bodies visit the nodes;
generating, by using the generated set of routes, a route selection problem with constraints on a shipment volume of a node serving as a shipment source of packages;
solving the generated route selection problem; and
outputting a result of solving the route selection problem.

7. An information processing apparatus (100) comprising:
a control unit (140) configured to execute a process of:
generating (S101) a set of a plurality of routes for a plurality of moving bodies that depart from a specific node and return to the specific node via a plurality of nodes, the plurality of routes representing an order in which the plurality of moving bodies visit the nodes;
generating, by using the generated set of routes, a route selection problem with constraints on a shipment volume of a node serving as a shipment source of packages;
solving (S106) the generated route selection problem; and
outputting (S107) a result of solving the route selection problem.
